Europäisches Patentamt

**European Patent Office**

Office européen des brevets

(11) Numéro de publication: **0 232 635**
**B1**

(12) FASCICULE DE BREVET EUROPEEN

(45) Date de publication du fascicule du brevet:
**12.09.90**

(51) Int. Cl.⁵: **G21C 9/02**

(21) Numéro de dépôt: 86402581.2

(22) Date de dépôt: 20.11.86

(54) Dispositif de déclenchement automatique de la chute d'un élément absorbant dans le coeur d'un réacteur nucléaire.

(30) Priorité: 28.11.85 FR 8517594

(43) Date de publication de la demande:
**19.08.87 Bulletin 87/34**

(45) Mention de la délivrance du brevet:
**12.09.90 Bulletin 90/37**

(84) Etats contractants désignés:
**CH DE ES GB IT LI SE**

(56) Documents cités:
**DE-A- 1 922 426**
**FR-A- 1 234 552**
**FR-A- 1 277 379**
**FR-A- 2 025 050**

(73) Titulaire: **COMMISSARIAT A L'ENERGIE ATOMIQUE,
31/33, rue de la Fédération, F-75015 Paris(FR)**

(72) Inventeur: **Fajeau, Maurice, 512, Rue du Saint Sépuicre,
F-84120 Pertuis(FR)**
Inventeur: **Debard, Alain, 4, rue Pascal Saint Germain de
la Grange, F-78640 Neauphle Le Château(FR)**
Inventeur: **Guillot, Jean-Francois, 14, rue Abbé de l'Epée
Château Double, F-13090 Aix en Provence(FR)**

(74) Mandataire: **Mongrédien, André et al, c/o
BREVATOME 25, rue de Ponthieu, F-75008 Paris(FR)**

ACTORUM AG

**Description**

L'invention concerne un dispositif de déclenchement automatique de la chute d'un élément absorbant les neutrons dans le coeur d'un réacteur nucléaire.

Plus précisément, le dispositif selon l'invention permet de désolidariser automatiquement, de son mécanisme de contrôle, un élément absorbant, lorsque le niveau du liquide de refroidissement, circulant dans la cuve contenant le coeur du réacteur descend en-dessous d'un niveau minimum.

Dans les réacteurs nucléaires, l'arrêt d'urgence de la réaction de fission qui se produit dans le coeur du réacteur est obtenu en faisant chuter dans ce dernier des éléments absorbant les neutrons.

Dans les réacteurs nucléaires à eau sous pression, ces éléments absorbants se présentent généralement sous la forme d'une grappe ou d'une barre de contrôle. Ils sont suspendus à une tige de commande, cette dernière étant elle-même reliée à un organe de manoeuvre par l'intermédiaire d'une liaison électromagnétique. En commandant la rupture de cette liaison, on provoque automatiquement la chute des éléments absorbants dans le coeur du réacteur et, par conséquent, l'arrêt immédiat de la réaction de fission.

L'expérience montre que ces systèmes d'arrêt d'urgence présentent une très grande fiabilité.

Cependant, l'information commandant l'arrêt d'urgence passe par une chaîne complexe d'appareillages électroniques et mécaniques, et donc la probabilité de l'hypothèse selon laquelle aucun des éléments absorbants ne chuterait dans le coeur du réacteur n'est pas nulle.

Malgré son caractère hautement improbable, cette hypothèse conduit à envisager l'existence d'un système d'arrêt d'urgence permettant, par effet mécanique direct, de séparer automatiquement l'élément absorbant de sa tige de commande lorsque les conditions de refroidissement imposent l'arrêt immédiat du réacteur.

Dans le document FR-A 1 277 379, un élément absorbant est solidarisé d'un bloc d'armement suspendu à la tête de barre par une tige dont l'extrémité inférieure coopère avec le bloc par un système de verrouillage à billes. Un piston solidaire d'un bilame libère automatiquement les billes lorsqu'une certaine température est dépassée, déclenchant ainsi la chute de l'élément absorbant.

L'invention a précisément pour objet un dispositif permettant de déclencher automatiquement la chute des éléments absorbants dans le coeur du réacteur en cas de baisse importante du niveau du liquide de refroidissement dans la cuve du réacteur consécutive à une fuite dans le circuit primaire de ce dernier.

Dans sa définition la plus générale permettant d'atteindre cet objectif, l'invention propose un dispositif de déclenchement automatique de la chute d'un élément absorbant les neutrons dans le coeur d'un réacteur nucléaire, lorsque le niveau d'un liquide de refroidissement circulant dans une cuve contenant le coeur du réacteur descend en-dessous d'un niveau minimum donné, l'élément absorbant étant normalement suspendu à un organe de support, ce dispositif étant caractérisé:

– par une pince montée sur l'organe de supportage et par laquelle l'élément absorbant est suspendu à l'organe de supportage, ladite pince comprenant au moins deux doigts comportant chacun une pièce de préhension mobile radialement par rapport à un axe vertical de l'organe de support, de telle sorte que la pince peut occuper une position d'ouverture et une position de fermeture, une surface de came étant formée sur chacune des pièces de préhension;

– par au moins un organe de verrouillage placé au contact desdites surfaces de came de façon à pouvoir se déplacer verticalement entre une position haute dans laquelle ledit organe verrouille la pince en position de fermeture et une position basse dans laquelle ledit organe autorise l'ouverture de la pince;

– au moins un flotteur associé à l'organe de support de façon à pouvoir se déplacer verticalement entre une position haute et une position basse, pour commander le déplacement vertical de l'organe de verrouillage entre sa position haute et sa position basse.

Grâce à ces caractéristiques, l'élément absorbant est normalement suspendu à la pince portée par la tige de commande, de telle sorte que les doigts de la pince soient bloqués en position fermée par le flotteur. Une baisse sensible du niveau du liquide de refroidissement contenu dans la cuve du réacteur fait descendre le flotteur, de sorte que les doigts de la pince sont libérés et que l'élément absorbant chute automatiquement par gravité dans le coeur du réacteur.

Dans un premier mode de réalisation de l'invention, une surface de came est également formée sur une tige verticale du flotteur, un organe de verrouillage étant interposé entre chacune des surfaces de came formées sur les doigts de la pince et la surface de came formée sur la tige verticale.

De préférence, afin que le mouvement du flotteur se fasse avec le minimum de frottement, les organes de verrouillage sont des billes.

Dans une première variante de réalisation de l'invention, les billes sont non flottantes et intercalées entre une butée inférieure formée sur le flotteur et une butée supérieure associée à l'organe de support, les doigts de la pince peuvent alors être fixés à l'organe de support et comprendre une partie élastique déformable radialement par rapport à un axe vertical de l'organe de support et qui supporte la pièce de préhension, la butée supérieure étant formée sur chacun des doigts.

Dans une variante particulièrement avantageuse, car elle permet le réarmement du dispositif après la chute de l'élément absorbant, les doigts de la pince sont montés sur une pièce apte à coulisser verticalement entre une position inférieure de fonctionnement normal et une position supérieure de réarmement, par rapport à l'organe de support, chacun des doigts comprenant une partie élastique déformable radialement par rapport à un axe vertical de l'organe de support et qui supporte la pièce de préhension, et des moyens élastiques étant interposés entre l'organe de support et ladite pièce pour placer cette dernière dans la position inférieure de fonctionnement normal.

Les billes constituant les organes de verrouillage peuvent aussi être des billes flottantes intercalées entre une cloison inférieure et une butée supérieure formées sur chacun des doigts.

Dans une variante avantageuse, le flotteur est prolongé à son extrémité supérieure par une capacité permettant de piéger du liquide en cas de baisse de niveau, ce liquide ajoutant son poids à celui du flotteur pour faciliter sa descente.

Dans un deuxième mode de réalisation de l'invention, le flotteur constitue lui-même un organe de verrouillage placé entre les surfaces de came en vis-à-vis formées sur les doigts de la pince.

Il existe alors au moins deux flotteurs présentant ici encore la forme de billes, chacune des billes étant placée entre une butée inférieure formée sur chacun des doigts et une butée supérieure associée à l'organe de supportage.

Selon un autre aspect de l'invention, la chute de l'élément absorbant peut également être obtenue au moyen d'un élément mécanique de commande monté sur l'organe de supportage de façon à pouvoir coulisser verticalement par rapport à celui-ci, cet élément de commande étant en appui sur le flotteur, de sorte que son déplacement vers le bas a pour effet d'amener le flotteur en position basse.

Un tel élément de commande peut être utilisé pour contrôler la chute de l'élément absorbant, un mécanisme de commande de chute commandant alors le déplacement de l'élément de commande, par exemple sous l'action d'un bilame sensible à la température régnant dans un cuve.

Afin de commander automatiquement la chute de l'élément absorbant lorsque la pression régnant dans la cuve dépasse une pression maximum donnée, le déplacement de l'élément de commande peut aussi être contrôlé par un dispositif sensible à la pression régnant dans la cuve.

En variante, la chute automatique de l'élément absorbant lorsque la pression régnant dans la cuve dépasse une pression maximum donnée est obtenue en prévoyant sur chaque flotteur au moins une partie apte à se déchirer dans ces conditions limite de pression.

Enfin, selon une variante particulièrement avantageuse puisqu'elle permet la réutilisation du dispositif après la chute de l'élément absorbant, ce même résultat est obtenu en équipant le flotteur à son extrémité inférieure d'une membrane déformable occupant une position inférieure ou une position supérieure selon que la pression régnant dans la cuve est inférieure ou supérieure à une pression maximum donnée. Cette membrane est fixée en son centre sur une pièce apte à coulisser verticalement par rapport à l'organe de supportage, cette pièce étant en appui contre une butée haute de l'organe de supportage lorsque le flotteur est en position haute. Sous l'effet d'une augmentation de la pression au-dessus de la pression maximum admissible, la membrane prend alors sa position supérieure, ce qui a pour effet de tirer le flotteur vers le bas puisque le centre de la membrane est fixé sur une pièce qui est elle-même en appui contre une butée haute et ne peut donc se déplacer vers le haut. La descente du flotteur conduit à déverrouiller la pince et à permettre la chute de l'élément absorbant, de la même manière qu'en cas de baisse du niveau du liquide de refroidissement dans la cuve du réacteur.

On décrira maintenant, à titre d'exemple non limitatif, différents modes de réalisation de l'invention en se référant aux dessins annexés dans lesquels :

- la figure 1 est une vue en élévation et en coupe représentant de façon très schématique un réacteur nucléaire à eau sous pression pouvant être équipé de dispositifs conformes à l'invention,

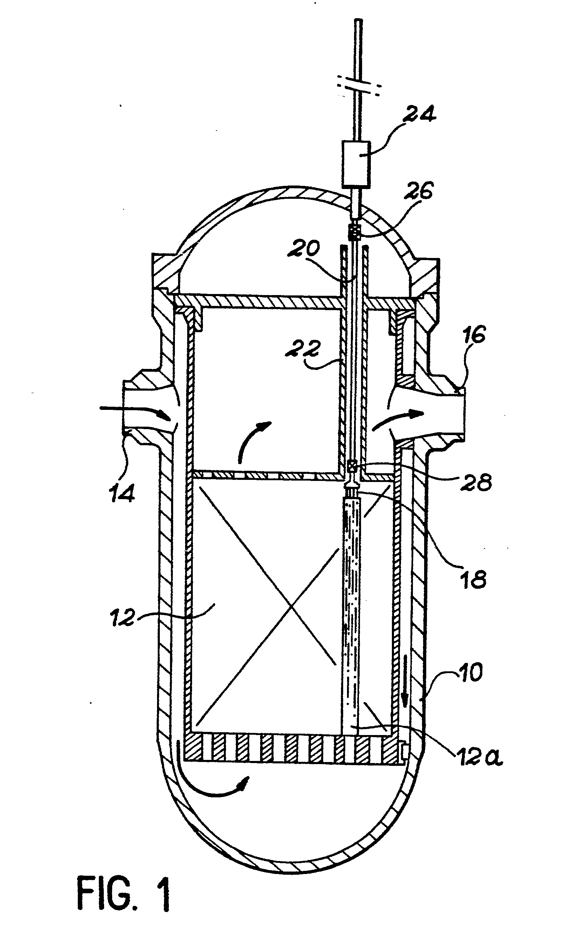

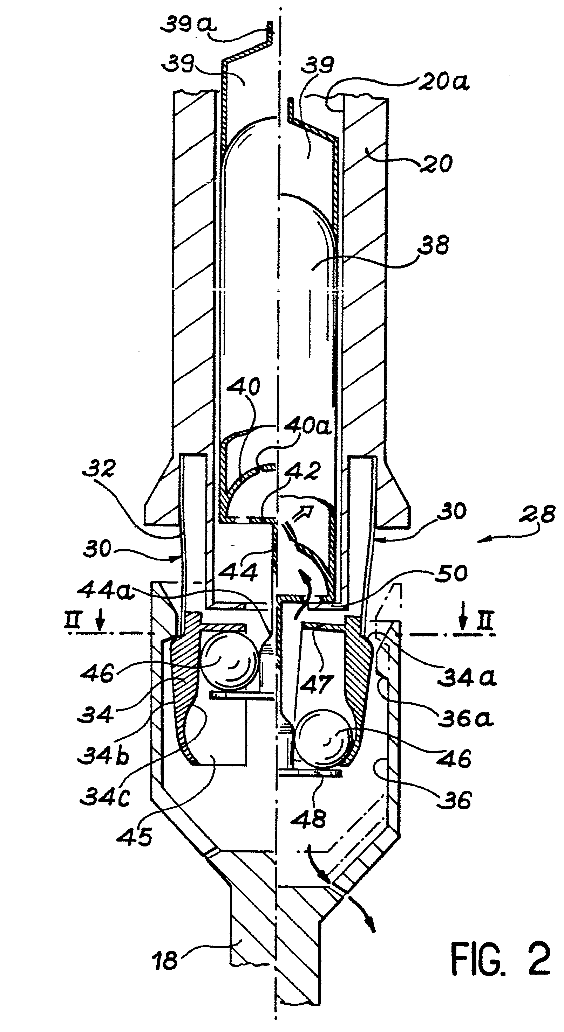

- la figure 2 est une vue en coupe longitudinale représentant, à plus grande échelle, la liaison entre un élément absorbant et sa tige de commande à l'aide d'un dispositif conforme à l'invention, dans le réacteur de la figure 1, et illustrant plus précisément un premier mode de réalisation de l'invention, la moitié gauche de la figure représentant le dispositif dans la position qu'il occupe normalement lorsque l'élément absorbant est suspendu à sa tige, alors que la moitié droite montre comment une baisse du niveau du liquide de refroidissement ou une augmentation de la pression conduit à la chute de l'élément absorbant,
- la figure 3 est une vue en coupe selon la ligne II-II de la figure 2,
- la figure 4 est une vue comparable à la figure 2 illustrant une variante du mode de réalisation représenté sur cette dernière figure,
- la figure 5 est une vue en coupe longitudinale partielle illustrant une autre variante du mode de réalisation des figures 2 et 4,
- la figure 6 est une vue comparable aux figures 2 et 4 illustrant une autre variante du mode de réalisation des figures 2 et 4,
- la figure 7 est une vue en perspective éclatée et en coupe partielle représentant une partie du dispositif de la figure 6,
- la figure 8 est une vue illustrant le réarmement du dispositif de la figure 6 en l'absence de liquide de refroidissement dans la cuve du réacteur,
- la figure 9 est une vue comparable à la figure 8 illustrant le réarmement du dispositif de la figure 6 en présence du liquide de refroidissement dans la cuve du réacteur,
- la figure 10 est une vue comparable aux figures 2, 4 et 6 illustrant un deuxième mode de réalisation de l'invention, et
- la figure 11 est une vue en coupe selon la ligne XII-XII de la figure 10.

Sur la figure 1, on a représenté de façon très schématique un réacteur nucléaire à eau sous pression.

De façon bien connue, ce réacteur comprend une cuve cylindrique 10, d'axe vertical, à l'intérieur de laquelle est placé le coeur 12 du réacteur, constitué par la juxtaposition d'assemblages de combustible nucléaire, tels que 12a. La cuve 10 est équipée d'une tubulure d'entrée 14 et d'une tubulure de sortie 16 disposées de telle sorte que l'eau sous pression constituant le liquide de refroidissement d'un tel réacteur circule de bas en haut dans le coeur 12.

La réaction de fission qui se produit dans le coeur 12 du réacteur est contrôlée en introduisant plus ou moins dans ce dernier des barres ou grappes de contrôle 18 constituant des éléments absorbant les neutrons. Chacune de ces barres de contrôle 18 peut notamment être constituée d'un faisceau de crayons absorbants aptes à coulisser verticalement dans des tubes guides prévus à cet effet dans certains des assemblages de combustible nucléaire 12a constituant le coeur 12 du réacteur.

Chacune des barres de contrôle 18 est suspendue par son extrémité supérieure à l'extrémité inférieure d'une tige de commande verticale 20. Le guidage de chacun des ensembles barres de contrôle 18-tiges de commande 20 est assuré au-dessus du coeur 12 par des tubes verticaux de guidage 22.

Chacune des tiges de commande 20 est suspendue par son extrémité supérieure à un mécanisme de commande 24 placé au-dessus du dôme de la cuve 10 et permettant de contrôler le déplacement vertical des barres 18, assurant ainsi le pilotage du réacteur.

De façon connue, les tiges de commande 20 sont suspendues aux mécanismes 24 par l'intermédiaire de dispositifs de couplage électromagnétiques 26. Lorsqu'un arrêt d'urgence du réacteur est requis, l'alimentation électrique de ces dispositifs 26 cesse, ce qui a pour effet de faire chuter les ensembles constitués par les tiges de commande 20 et par les barres de contrôle 18. Ces dernières se trouvent ainsi introduites en totalité dans le coeur 12, ce qui a pour effet d'arrêter la réaction de fission.

Conformément à l'invention, on adjoint ou on substitue à cette possibilité de faire chuter les barres de contrôle par arrêt de l'alimentation électrique des dispositifs électromagnétiques 26 la possibilité liée aux dispositifs 28 par lesquels l'extrémité supérieure de chacune des barres de contrôle 18 est suspendue l'extrémité inférieure de chacune des tiges de commande 20.

Ces dispositifs 28 sont destinés à accroître la sûreté du réacteur. Comme on va le voir ultérieurement, ils permettent en effet de faire chuter les barres de contrôle 18 automatiquement dans le coeur 12 du réacteur dans des conditions nécessitant un arrêt d'urgence de ce dernier.

Ces conditions particulières nécessitant l'arrêt d'urgence du réacteur sont principalement une baisse importante du niveau de l'eau dans la cuve 10 du réacteur et, le plus souvent bien que de façon non obligatoire, le dépassement de la pression maximale de fonctionnement tolérée à l'intérieur de la cuve 10.

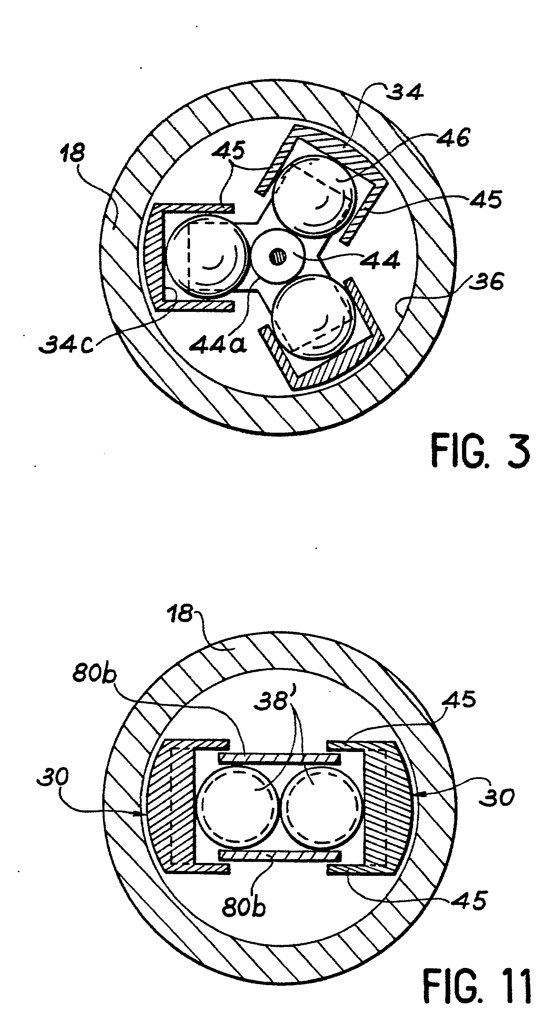

Un premier mode de réalisation de l'un des dispositifs 28 va maintenant être décrit en détail en se référant aux figures 2 et 3.

Comme le montre la figure 2, le dispositif 28 comprend une pince formée d'au moins deux doigts 30 (trois dans le mode de réalisation représenté sur la figure 3) montés à l'extrémité inférieure de la tige de commande 20. Les doigts 30 sont identiques et répartis circonférentiellement autour de l'axe vertical de la tige 20. En outre, ils sont orientés sensiblement parallèlement à cet axe et font saillie vers le bas à partir de l'extrémité inférieure de la tige 20.

Dans le mode de réalisation représenté sur la figure 2, chacun des doigts 30 comporte une partie 32 constituée par une lame flexible radialement par rapport à l'axe vertical de la tige 20. L'extrémité supérieure de la partie flexible 32 est fixée à l'extrémité inférieure de la tige de commande 20.

A son extrémité inférieure, chacune des parties flexibles 32 supporte une pièce de préhension 34. La face externe de la pièce 34 comporte à son extrémité supérieure un épaulement arrondi 34a apte à venir se loger sous un épaulement 36a formé à l'extrémité supérieure d'un évidement central 36 ménagé dans la tête de la barre de contrôle 18 correspondante.

En-dessous de l'épaulement 34a, la surface externe de chacune des pièces 34 est légèrement effilée vers le bas en 34b comme l'illustre la figure 2.

Sur sa face interne, chacune des pièces de préhension 34 définit une surface de came 34c. Cette surface 34c est telle que la distance qui la sépare de l'axe vertical de la tige de commande 20 augmente de haut en bas sur la majeure partie de la hauteur de la pièce 34. De façon plus précise, dans sa partie haute, la surface 34c est pratiquement parallèle à cet axe vertical, alors qu'elle s'évase dans sa partie basse, qui présente en section droite la forme d'un arc de cercle.

Dans le mode de réalisation représenté sur les figures 2 et 3, le dispositif 28 selon l'invention comprend de plus un flotteur cylindrique creux 38, reçu dans un évidement cylindrique 20a formé à l'extrémité inférieure de la tige de commande 20, selon l'axe vertical de cette dernière.

Le flotteur 38 comprend deux fonds plats ou hémisphériques. Dans ce dernier cas, le fond supérieur est convexe alors que le fond inférieur 40 est concave. Au-dessus du fond supérieur est fixée une capacité 39 permettant de permettant de piéger du liquide de refroidissement. Cette capacité est équipée à cet effet d'un orifice supérieur 39a. En-dessous du fond inférieur concave 40, le flotteur 38 comporte une plaque horizontale perforée 42. Une tige verticale 44 de section circulaire est accrochée au centre de cette plaque 42 et fait saillie vers le bas entre les doigts 30 de la pince. La tige 44 comporte une partie supérieure de faible diamètre et une partie inférieure de plus grand diamètre, le diamètre de la tige augmentant progressivement entre ces deux parties. La surface extérieure 44a de la tige 44 définit ainsi une surface de came 44a, cette surface pouvant être cylindrique ou plane.

Dans le mode de réalisation représenté sur la figure 2, des billes non flottantes telles que des billes d'acier 46 sont placées entre chacune des pièces de préhension 34 et la tige 44, de façon à rouler sur les surfaces de came en vis-à-vis 34c et 44a formées sur ces éléments.

Comme l'illustre plus précisément la figure 3, chacune des billes 46 est maintenue latéralement entre deux cloisons verticales 45 parallèles entre elles et formées sur la pièce 34 correspondante de façon à faire saillie de part et d'autre de la bille 46, à partir de la surface de came 34b.

Par ailleurs, chacune des billes 46 est maintenue selon l'axe vertical de la tige de commande entre une butée inférieure formée par une plaque horizontale 48 fixée à l'extrémité inférieure de la tige 44 et une butée supérieure formée par une cloison horizontale 47 formée dans la pièce 34 correspondante et reliant les cloisons 45 à leur extrémité supérieure.

Enfin, l'évidement cylindrique 20a dans lequel est reçu le flotteur 38 se termine à son extrémité inférieure par une plaque horizontale 50 formant butée, que traverse en son centre la tige 44.

Dans les conditions normales de fonctionnement, le flotteur 38 est placé en-dessous du niveau de l'eau dans la cuve du réacteur. Le flotteur 38 étant rempli d'un fluide de plus faible densité tel que de l'argon, il se trouve alors dans une position haute dans laquelle il applique, par l'intermédiaire de la plaque 48, les billes 46 contre les cloisons 47.

Dans cette position haute, représentée sur la moitié gauche de la figure 2, les billes 46 sont repoussées radialement vers l'extérieur par la partie inférieure de plus grand diamètre de la tige 44. Compte tenu de la flexibilité de la partie 32 de chacun des doigts 30, les pièces de préhension 34 sont naturellement repoussées radialement vers l'extérieur, de sorte que les épaulements 34a se trouvent bloqués en-dessous de l'épaulement 36a et que l'élément absorbant 18 reste accroché à la tige de commande 20.

Lorsque le niveau de l'eau dans la cuve du réacteur descend en-dessous d'une valeur limite pour laquelle les flotteurs 38 sont encore immergés, ces derniers descendent automatiquement jusqu'à venir en appui contre la plaque 50, comme l'illustre la moitié droite de la figure 2. Cette descente est facilitée par le liquide de refroidissement qui se trouve piégé dans la capacité 39. Etant donné que les billes 46 ne flottent pas, elles descendent en roulant avec le flotteur 38 et tombent en appui sur la plaque 48.

Les billes 46 se trouvent alors au niveau de la partie inférieure évasée des surfaces de came 34c formées à l'intérieur de chacune des pièces de préhension 34. Par conséquent, l'effort radial vers l'extérieur que les billes exerçaient auparavant sur les doigts 30 est relâché. Compte tenu de la flexibilité des parties 32 des doigts, du caractère arrondi de l'épaulement 34a, et du chanfrein de l'épaulement 36a, l'élément absorbant 18 chute alors par gravité comme on le voit sur la moitié droite de la figure 2.

De préférence et comme on l'a également représenté sur la figure 2, le dispositif selon l'invention est également conçu pour déclencher automatiquement la chute de l'élément absorbant 18 lorsque la pression à l'intérieur de la cuve du réacteur dépasse un seuil déterminé.

Dans le mode de réalisation représenté sur la figure 2, ce résultat est obtenu en prévoyant sur le fond hémisphérique convexe 40 du flotteur 38 des parties 40a de moindre résistance constituées par exemple par des entailles usinées sur ce fond.

Comme on l'a représenté sur la moitié droite de la figure 2, une augmentation de la pression au-delà du seuil de résistance de ces entailles 40a conduit à un éclatement du fond 40. L'eau pénètre alors à l'intérieur du flotteur 38, ce qui a pour effet de faire descendre celui-ci et conduit aux mêmes conséquences que celles qui viennent d'être décrites lorsque la descente du flotteur résulte d'une baisse du niveau de l'eau dans la cuve du réacteur.

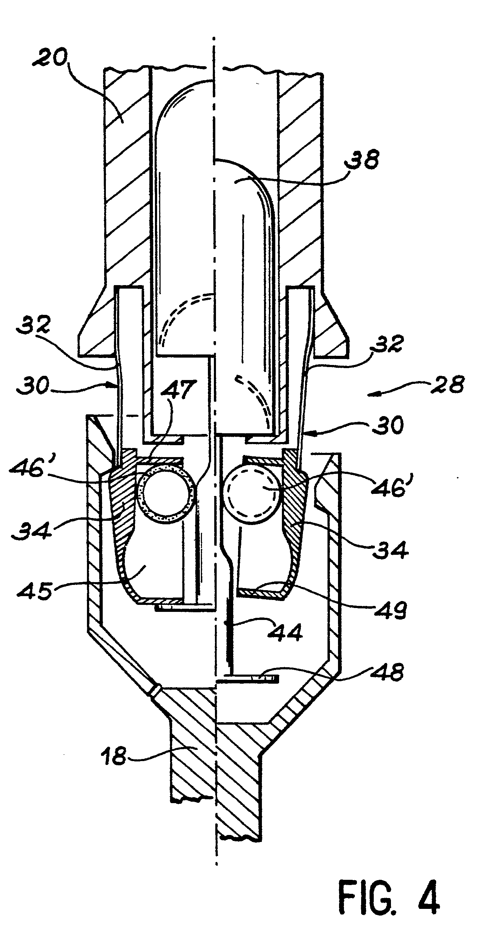

Sur la figure 4, on a représenté une variante de réalisation du dispositif 28 selon l'invention, qui ne diffère du mode de réalisation précédemment décrit en se référant aux figures 2 et 3 que par la constitution des billes assurant le verrouillage de la pince dans les conditions normales de fonctionnement du réacteur.

De façon plus précise, dans le mode de réalisation de la figure 4, on place entre la tige 44 du flotteur 38 et chacune des pièces de préhension 34 des doigts 30 une bille flottante 46' qui reste en permanence en appui contre la cloison supérieure 47 de la pièce 34 correspondante.

Dans ce cas, chacune des pièces 34 comprend de plus une cloison inférieure horizontale 49 reliant les parois latérales 45 à leurs extrémités inférieures. La plaque 48 fixée à l'extrémité inférieure de la tige 44 du flotteur est alors située en-dessous de cette cloison inférieure 49.

Ainsi, dans les conditions normales de fonctionnement représentées sur la moitié gauche de la figure 4, la position haute du flotteur 38 est déterminée par la venue en appui de la plaque 48 contre les cloisons inférieures 49 de chacun des doigts. Dans cette position, les billes 46' se trouvent au niveau de la partie inférieure de grand diamètre de la tige 44, ce qui a pour effet de déformer radialement vers l'extérieur les parties flexibles 32 de chacun des doigts 30. La pince formée par ces doigts se trouve ainsi verrouillée en position fermée ou de préhension, dans laquelle l'élément absorbant 18 est suspendu à la tige de commande 20.

Comme l'illustre la moitié droite de la figure 4, une descente du flotteur 38 pouvant ici encore résulter soit d'une baisse du niveau de l'eau à l'intérieur de la cuve du réacteur, soit d'une élévation de la pression à l'intérieur de cette cuve au-delà d'un seuil maximum admissible, conduit à mettre les billes 46', qui restent au même niveau, en regard de la partie supérieure de petit diamètre de la tige 44. Par conséquent, l'effort radial vers l'extérieur exercé précédemment sur les doigts 30 au travers des billes 46' est relâché, déclenchant ainsi automatiquement la chute par gravité de l'élément absorbant 18.

Jusqu'à présent, on a vu que le fonctionnement du dispositif en cas de dépassement de la pression maximale de fonctionnement conduisait à l'éclatement du fond du flotteur 38. Cette solution n'est cependant pas entièrement satisfaisante, car il est alors nécessaire de remplacer le flotteur lorsqu'un tel déclenchement a eu lieu.

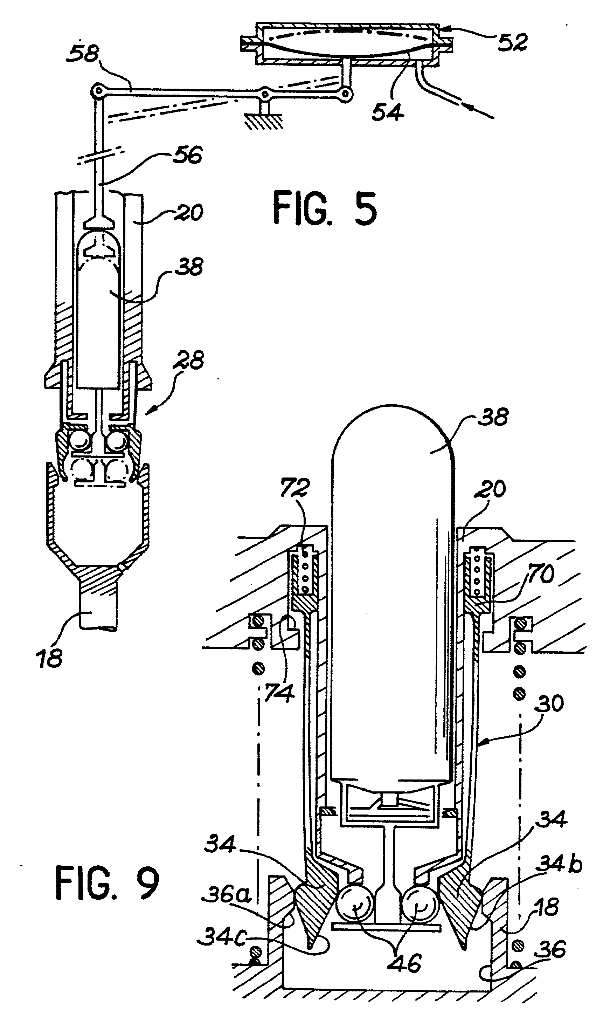

Sur la figure 5, on a représenté de façon très schématique une autre variante du mode de réalisation décrit précédemment en se référant aux figures 2 et 3, permettant de supprimer cet inconvénient.

Comme le montre la figure 5, le dispositif 28 est alors réalisé exactement de la même manière que le dispositif représenté sur les figures 2 et 3, avec pour seule différence le fait que le flotteur 38 ne comprend aucune partie conçue pour éclater lorsque la pression dans la cuve du réacteur dépasse une pression maximum autorisée.

En revanche, on utilise un dispositif annexe 52 comportant une membrane étanche 54 apte à occuper deux positions selon que la pression dans la cuve est inférieure ou supérieure à une valeur déterminée. A cet effet, l'une des faces de la membrane 54 (la face inférieure sur la figure 5) est soumise à la pression régnant à l'intérieur de la cuve. Ce résultat peut être obtenu soit en plaçant le dispositif 52 directement dans la cuve du réacteur, soit en faisant communiquer la face inférieure de la membrane avec la cuve par une canalisation appropriée.

Dans les conditions normales de pression, c'est-à-dire lorsque la pression est inférieure à la valeur limite admissible, la membrane 54 occupe la position basse représentée en trait plein sur la figure 5. Au contraire, lorsque la pression dépasse cette valeur limite, la membrane 54 bascule pour prendre la position haute représentée en traits mixtes sur la figure 5.

En reliant par une tringlerie 58 le centre de la membrane 54 à un poussoir 56 disposé à l'intérieur de la tige de commande 20, de façon à être en contact avec le fond supérieur du flotteur 38, on comprend que le basculement de la membrane 54 sous l'effet d'un accroîssement inadmissible de la pression dans la cuve peut conduire à pousser le flotteur 38 vers le bas comme on l'a représenté en traits mixtes sur la figure 5. On déclenche ainsi automatiquement la chute de l'élément absorbant 18 de la manière décrite précédemment. Bien entendu, un seul dispositif 52 peut être utilisé pour commander simultanément plusieurs éléments absorbants 18.

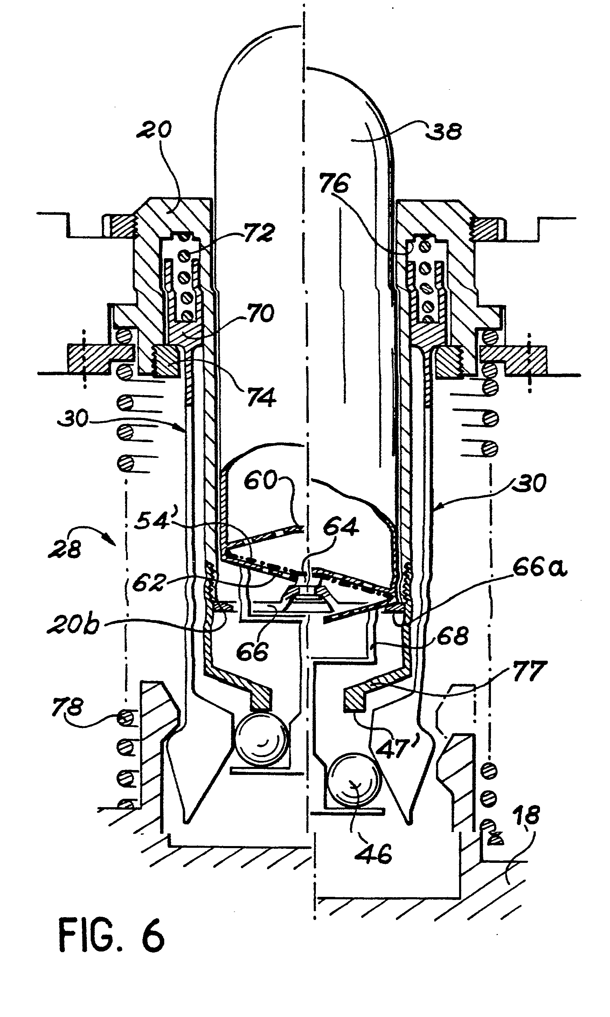

Le principe qui vient d'être décrit en se référant à la figure 5 est repris dans une autre variante du mode de réalisation de la figure 1 qui va maintenant être décrite en se référant aux figures 6 à 9. Cette variante a pour autre avantage de permettre le réarmement du dispositif après la chute en sécurité des éléments absorbants, ce qui n'était pas possible dans les variantes décrites précédemment.

Comme l'illustre en particulier, la figure 6, une membrane étanche 54' apte à occuper deux positions est intégrée dans ce cas directement dans le fond inférieur du flotteur 38.

De façon plus précise, la membrane 54' est pincée à sa périphérie entre une plaque conique perforée supérieure 60 et une plaque conique perforée inférieure 62. La conicité de ces plaques 60 et 62 est opposée de façon à permettre le débattement de la membrane 54' entre une position inférieure correspondant aux conditions normales de fonctionnement et une position supérieure correspondant à un accroîssement de la pression interne à la cuve du réacteur au-delà du seuil maximum admissible.

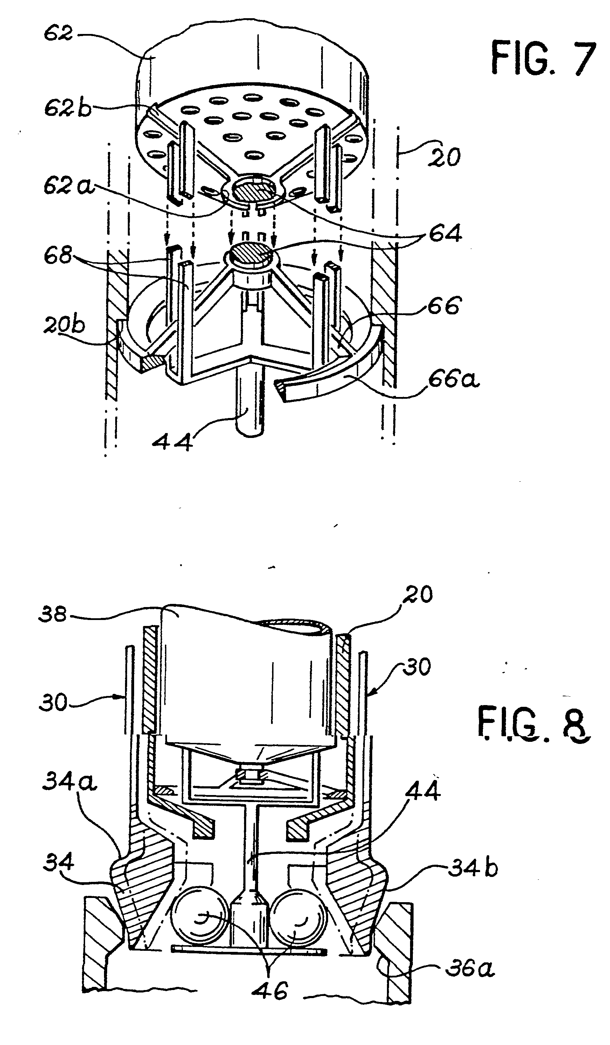

Un plot 64 est fixé au centre de la membrane 54' de façon à faire saillie vers le bas au travers d'un passage central 62a formé dans la plaque inférieure 62 et apparaissant mieux sur la figure 7. Le plot 64 supporte une pièce 66 en forme d'étoile. La pièce 66 comporte à sa périphérie une couronne 66a qui est normalement en appui contre un épaulement 20b formé sur la tige de commande 20, lorsque la membrane 54' est en position basse comme l'illustre la moitié gauche de la figure 6. L'épaulement 20b est disposé au-dessus de la couronne périphérique 66a de la pièce 66, de telle sorte qu'il empêche la montée de celle-ci.

Comme l'illustre plus précisément la figure 7, afin de permettre la descente du flotteur 38, la plaque inférieure 62 comporte également des fentes radiales 62b débouchant dans l'ouverture centrale 62a et situées au-dessus de chacun des bras de la pièce 66.

Pour tenir compte de la présence entre le fond du flotteur 38 et la tige 44 de la pièce 66, la tige 44 est fixée à la plaque inférieure 62 par des barres verticales 68 apparaissant mieux sur la figure 7. On voit aussi sur cette derniéère que les barres verticales 68 ont également pour fonction de guider la pièce 66 afin que chacun de ses bras reste en vis-à-vis des fentes radiales 62b.

Afin de permettre le réarmement du dispositif, dans le mode de réalisation de la figure 6, les doigts 30 de la pince ne sont plus directement fixés à l'extrémité inférieure de la tige de commande 20 mais montés sur celle-ci de façon à pouvoir coulisser verticalement d'une certaine hauteur. A cet effet, les doigts 30 sont fixés à leur extrémité supérieure sur une couronne 70 entourant la tige de commande 20. Cette couronne 70 est plaquée contre une butée basse 74 de la tige 20 par un ressort de compression 72. Une butée haute 76 sur laquelle prend également appui le ressort 72 limite le déplacement vers le haut de la couronne 70.

Compte tenu de la mobilité de la pince selon une direction verticale, la butée haute contre laquelle les billes 46 sont normalement en appui (moitié gauche de la figure 6) n'est plus formée sur les doigts 30, mais sur une pièce tubulaire 77 fixée à l'extrémité inférieure de la tige de commande 20. Cette butée, constituée par l'extrémité inférieure de la pièce 77, est désignée par la référence 47' sur la figure 6.

Le déclenchement du dispositif 28 représenté sur les figures 6 et 7 est analogue à celui qui a été décrit précédemment en se référant aux figures 2 et 3, en cas de baisse de niveau de l'eau contenue dans la cuve du réacteur.

Lorsque la pression à l'intérieur de la cuve dépasse le seuil maximum admissible, la membrane 54' tend à se déformer pour prendre sa position haute dans laquelle elle est appliquée contre la paroi 60. Etant donné que la couronne périphérique de la pièce 66 est en appui contre la butée 20b de la tige de commande 20, cette déformation n'a pas pour effet de faire monter la pièce 66, mais au contraire de faire descendre le flotteur 38 comme on l'a représenté sur la moitié droite de la figure 6. On se retrouve alors dans les conditions décrites précédemment conduisant au déverrouillage de la pince formée par les doigts 30 et, par conséquent, à la chute par gravité de l'élément absorbant 18 dans le coeur du réacteur.

Sur la figure 6, on a également représenté une variante selon laquelle le décrochage de l'élément absorbant 18 est assisté par la présence d'un ressort de compression 78 fixé à la tige de commande 20 et normalement comprimé entre l'extrémité inférieure de cette tige et l'extrémité supérieure de l'élément absorbant 18.

Grâce à la possibilité de déplacement vers le haut de la pince comprenant les doigts 30 et la couronne 70, le réarmement du dispositif devient possible quelles que soient les conditions dans lesquelles on se trouve.

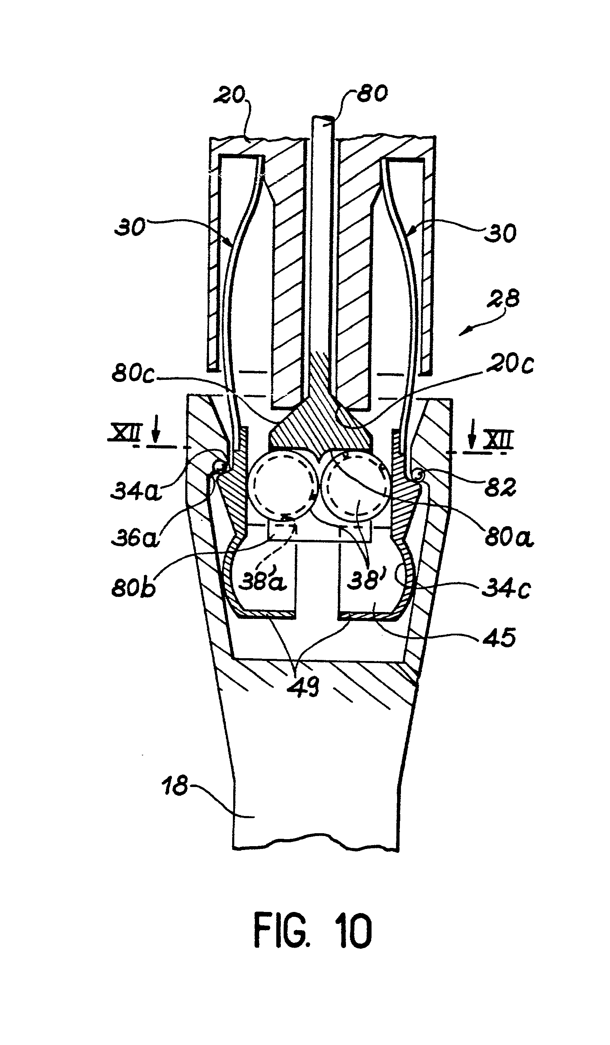

Ainsi, sur la figure 8, on a représenté les positions occupées par les différents éléments du dispositif de la figure 6, après la chute de l'élément absorbant, la cuve du réacteur étant vidée de son eau.

Dans ces conditions, le flotteur 38 est en position basse, de sorte qu'aucun effort radial n'est exercé par la tige centrale 44 sur les doigts 30 au travers des billes 46. Il existe même un certain jeu permettant aux doigts 30 de se déformer radialement vers l'intérieur comme on l'a représenté en traits mixtes sur la figure 8. Cette déformation intervient naturellement lorsque la tige de commande 20 est descendue jusqu'à ce que les surfaces externes fuselées 34b des pièces de préhension 34 viennent en appui sur le chanfrein 36a ménagé à l'extrémité supérieure de l'évidement 36 formé dans la tête de l'élément absorbant 18.

Compte tenu du jeu existant entre les pièces de préhension 34 et les billes 46, la poursuite de la descente de la tige de commande 20 a pour effet de déformer les doigts 30 radialement vers l'intérieur jusqu'à la position représentée en traits mixtes sur la figure 8. L'épaulement 36a formé sur la tête de l'élément absorbant peut ainsi être franchi. La flexibilité radiale des doigts 30 a ensuite pour effet de ramener ceux-ci dans la position représentée en trait plein sur la figure 8, de telle sorte que les épaulements 34a soient situés en-dessous de l'épaulement 36a.

Avant que la remontée de l'élément absorbant ne puisse avoir lieu, la cuve du réacteur doit être à nouveau remplie d'eau afin que le flotteur 38 remonte à l'intérieur de la tige de commande 20, de façon à amener les billes 46 dans leur position haute assurant le verrouillage des doigts 30 en position de fermeture de la pince. La remontée de l'élément absorbant peut ensuite être effectuée à l'aide du mécanisme de commande 24 (figure 1) qui lui est associé.

La figure 9 montre qu'avec le dispositif décrit précédemment en se référant aux figures 6 et 7, le réarmement est également possible lorsque la cuve est remplie d'eau.

Dans ce cas, comme le montre la figure 9, le flotteur 38 est en position haute, de sorte que les billes 46 se trouvent également en position haute et verrouillent normalement la pince en position fermée ou de préhension.

Dans ces conditions, lorsqu'on descend la tige de commande 20 on amène comme précédemment la partie inférieure fuselée des pièces de préhension 34 en contact avec le chanfrein ménagé à l'extrémité supérieure de l'évidement formé dans la tête de l'élément absorbant 18. Cependant, les billes 46 se trouvent alors dans une position telle qu'elles verrouillent la pince et empêchent donc la déformation radiale des doigts 30 vers l'intérieur.

Comme l'illustre précisément la figure 9, la poursuite de la descente de la tige de commande 20 a alors pour effet de faire remonter la pince constituée par la pièce annulaire 70 et par les doigts 30, en comprimant le ressort 72. La course vers le haut dont dispose la pince est telle qu'elle permet d'amener les parties inférieures des surfaces de came 34c formées sur les pièces de préhension 34 au niveau des billes 46. Ces parties inférieures étant plus éloignées de l'axe vertical de la tige de commande que les parties supérieures des surfaces de came 34c, l'effort exercé radialement vers l'extérieur par les billes 46 sur les doigts 30 est relâché. Les doigts 30 disposent même d'un débattement vers l'intérieur suffisant pour leur permettre de franchir l'épaulement 36a.

Dès que ce franchissement est effectué, le ressort 72 s'étend à nouveau de façon à ramener la pièce annulaire 70 en appui contre l'épaulement 74 de la tige de commande 20. Le réarmement du dispositif est ainsi effectué et l'élément absorbant 18 peut être remonté à l'aide du mécanisme de commande 24 (figure 1) qui lui est associé.

Sur les figures 10 et 11, on a représenté un deuxième mode de réalisation du dispositif 28 selon l'invention. Dans ce mode de réalisation, les billes 38' assurant le blocage de la pince en position de fermeture ou de préhension constituent également les flotteurs assurant le relâchement du dispositif et l'ouverture de la pince lorsque le niveau de l'eau dans la cuve du réacteur descend en-dessous du niveau inférieur admissible.

Dans ce mode de réalisation des figures 10 et 11, le dispositif 28 comprend une pince constituée ici de deux doigts 30 fixés à l'extrémité inférieure de la tige de commande 20. Les doigts 30 sont réalisés pour l'essentiel sensiblement de la même manière que dans le premier mode de réalisation. Toutefois, comme le montre la figure 10, la cloison supérieure 47 est supprimée, les billes flottantes 38' venant en appui contre une butée haute 80a formée à l'extrémité inférieure d'une tige verticale 80 montée de façon coulissante selon l'axe de la tige de commande 20.

Par rapport au premier mode de réalisation décrit précédemment, le mode de réalisation des figures 10 et 11 se distingue également par le fait que le flotteur 38 est supprimé, de même que sa tige 44. Les deux flotteurs 38' en forme de billes qui sont en contact avec les surfaces de came 34c formées à l'intérieur des doigts 30 sont donc directement en appui l'une sur l'autre.

Dans la réalisation proposée sur les figures 10 et 11, le maintien latéral des billes 38' est obtenu au moyen de deux cloisons verticales et parallèles 80b qui viennent coulisser à l'intérieur des cloisons 45 formées sur les doigts 30.

Comme l'illustre précisément la figure 10, lorsque le niveau de l'eau dans la cuve du réacteur est normal, les billes flottantes 38' occupent une position haute dans laquelle elles sont plaquées contre la butée haute 80a. De ce fait, cette dernière occupe également une position haute dans laquelle une portée conique 80c est en appui contre une portée conique 20c formée à l'extrémité inférieure de la tige de commande 20. Les billes 38' se trouvent alors au niveau de la partie supérieure des surfaces de came 34c formées à l'intérieur des doigts 30 de la pince. Dans ces conditions, la pince est verrouillée en position de fermeture ou de préhension.

Au contraire, si le niveau de l'eau à l'intérieur de la cuve du réacteur descend en-dessous du niveau occupé par les billes flottantes 38', celles-ci descendent également pour venir en appui contre les cloisons inférieures 49 des doigts de la pince. Dans ces conditions, les billes 38' se trouvent en appui contre la partie inférieure des surfaces de came 34c. La distance séparant ces surfaces de came de l'axe vertical de la tige de commande 20 étant plus grande au niveau de cette partie inférieure qu'au niveau de la partie supérieure, le verrouillage de la pince est donc automatiquement relâché et l'élément absorbant 18 se décroche sous l'effet de son propre poids.

Dans le mode de réalisation illustré par la figure 10, ce décrochage est facilité par le fait que le contact entre les épaulements 36a et 34a s'effectue par l'intermédiaire de billes de roulement 82.

Comme dans le mode de réalisation de la figure 2, le dispositif 28 représenté sur les figures 10 et 11 peut également se déclencher lorsque la pression dans la cuve du réacteur dépasse une valeur limite admissible. A cet effet, on peut prévoir dans la paroi de chacune des billes 38' une partie de moindre résistance 38'a constituée par exemple par une gorge usinée dans cette paroi.

Un déclenchement analogue peut également être obtenu grâce à un dispositif du type de celui qui a été décrit précédemment en se référant à la figure 5, ce dispositif déplaçant les billes 38' vers le bas en agissant au travers de la tige 80.

En variante, il est à noter que la tige 80 peut également être utilisée pour commander le déclenchement de la chute de l'élément absorbant 18 à l'aide de tout autre dispositif externe (non représenté), tel qu'un bilame sensible à la température régnant dans la cuve.

De ce point de vue, on remarquera que si le dispositif selon l'invention est conçu pour être placé entre chacune des tiges de commande 20 et l'élément absorbant 18 correspondant, il pourrait aussi être placé à tout autre endroit en aval du mécanisme de commande 24 et notamment être utilisé à la place du dispositif électromagnétique 26.

De façon comparable, l'application du dispositif selon l'invention n'est pas limitée à un réacteur nucléaire à eau sous pression et peut être envisagé dans des réacteurs nucléaires de tout autre type.

En ce qui concerne la structure du dispositif proprement dit, les doigts de la pince peuvent ne pas comprendre une partie flexible selon une direction radiale mais être montés à l'extrémité inférieure de l'organe de commande qui les supporte de façon à pouvoir se déplacer librement dans une direction radiale.

Par ailleurs, si le blocage des doigts de la pince au moyen d'organes en forme de billes est plus particulièrement avantageux parce qu'il favorise le déclenchement du dispositif en réduisant les frottements, on comprendra que l'utilisation de billes n'est pas limitative et que les organes de verrouillage tels que des rouleaux pourraient également être utilisés. De façon plus générale, si l'on admet un frottement très faible, on peut aussi remplacer l'ensemble des billes par un organe unique ayant un contact quasi ponctuel avec chacune des surfaces de came formée sur les doigts de la pince.

En outre, dans chacun des modes de réalisation, il est possible de prévoir une tige centrale venant en appui sur le flotteur et commandée par un mécanisme extérieur quelconque afin d'assurer le déclenchement du dispositif dans des conditions autres que celles pour lesquelles ce dispositif a été spécifiquement conçu.

Enfin, bien que tous les modes de réalisation décrits comprennent une pince dont la préhension s'effectue par un écartement radial des doigts, une disposition inverse peut également être utilisée. Dans ce cas, le verrouillage s'effectue au moyen d'un organe tubulaire coulissant autour de la tige de commande et venant normalement coiffer les doigts de la pince. Cet organe peut être lui-même un flotteur ou supporter des organes de verrouillage annexes tels que des billes.

## Revendications

1. Dispositif de déclenchement automatique de la chute d'un élément (18) absorbant les neutrons dans le coeur (12) d'un réacteur nucléaire, lorsque le niveau d'un liquide de refroidissement circulant dans une cuve (10) contenant le coeur du réacteur descend en-dessous d'un niveau minimum, l'élément absorbant (18) étant normalement suspendu à un organe de support (20), ce dispositif étant caractérisé:
   – par une pince montée sur l'organe de support (20) et par laquelle l'élément absorbant (18) est suspendu à l'organe de support, ladite pince comprenant au moins deux doigts (30) comportant chacun une pièce de préhension (34) mobile radialement par rapport à un axe vertical de l'organe de support, de telle sorte que la pince peut occuper une position d'ouverture et une position de fermeture, une surface de came (34c) étant formée sur chacune des pièces de préhension (34);
   – par au moins un organe de verrouillage (46, 46'; 38') placé au contact desdites surfaces de came (34c), de façon à pouvoir se déplacer verticalement entre une position haute dans laquelle ledit organe verrouille la pince en position de fermeture et une position basse dans laquelle ledit organe autorise l'ouverture de la pince;
   – au moins un flotteur (38, 38') associé à l'organe de support (20) de façon à pouvoir se déplacer verticalement entre une position haute et une position basse, pour commander le déplacement vertical de l'organe de verrouillage entre sa position haute et sa position basse.

2. Dispositif selon la revendication 1, caractérisé par le fait qu'une surface de came (44a) est également formée sur une tige verticale (44) du flotteur (38), un organe de verrouillage (46, 46') étant interposé entre chacune des surfaces de came (34c) formées sur les doigts et la surface de came (44a) formée sur la tige verticale.

3. Dispositif selon la revendication 2, caractérisé en ce que les organes de verrouillage sont des billes non flottantes (46), intercalées entre une butée inférieure (48) formée sur le flotteur (38) et une butée supérieure (47, 47') associée à l'organe de support (20).

4. Dispositif selon la revendication 3, caractérisé en ce que les doigts (30) de la pince sont fixés à l'organe de support (20) et comprennent une partie élastique (32) déformable radialement par rapport à un axe vertical de l'organe de supportage et qui supporte la pièce de préhension (34), ladite butée supérieure (47) étant formée sur chacun des doigts.

5. Dispositif selon la revendication 3, caractérisé en ce que les doigts (30) de la pince sont montés sur une pièce (70) apte à coulisser verticalement entre une position inférieure de fonctionnement normal et une position supérieure de réarmement, par rapport à l'organe de support (20), chacun des doigts (30) comprenant une partie élastique (32) déformable radialement par rapport à un axe vertical de l'organe de support et qui supporte la pièce de préhension (34), et des moyens élastiques (72) étant interposés entre l'organe de supportage (20) et ladite pièce (70) pour placer cette dernière dans la position inférieure de fonctionnement normal.

6. Dispositif selon la revendication 2, caractérisé en ce que les organes de verrouillage sont des billes flottantes (46'), intercalées entre une cloison inférieure (49) et une butée supérieure (47) formées sur chacun des doigts (30).

7. Dispositif selon la revendication 1, caractérisé en ce que le flotteur (38') constitue un organe de verrouillage placé entre les surfaces de came en vis-à-vis (34c) formées sur les doigts (30) de la pince.

8. Dispositif selon la revendication 7, caractérisé en ce que le flotteur est prolongé à son extrémité supérieure par une capacité apte à piéger du liquide admis par une ouverture formée à son extrémité supérieure.

9. Dispositif selon la revendication 7, caractérisé en ce que chaque flotteur est une bille (38') placée entre une butée inférieure (49) formée sur chacun des doigts (30) et une butée supérieure (80a) associée à l'organe de supportage (20).

10. Dispositif selon l'une quelconque des revendications 1 à 9, caractérisé en ce qu'un élément mécanique de commande (56, 80) est monté sur l'organe de supportage (20) de façon à pouvoir coulisser verticalement par rapport à celui-ci, ledit élément de commande étant en appui sur le flotteur (38, 38'), de sorte que son déplacement vers le bas a pour effet d'amener le flotteur en position basse.

11. Dispositif selon la revendication 10, caractérisé en ce que le déplacement de l'élément de commande (80) est commandé par un mécanisme de commande de chute.

12. Dispositif selon la revendication 10, caractérisé en ce que le déplacement de l'élément de commande (56) est contrôlé par un dispositif (52) sensible à la pression régnant dans la cuve (10) pour commander le déplacement vers le bas dudit élément de commande (56) lorsque cette pression dépasse une pression maximum donnée.

13. Dispositif selon l'une quelconque des revendications 1 à 11, caractérisé en ce que chaque flotteur (38, 38') comprend au moins une partie (40a, 38'a) apte à se déchirer lorsque la pression régnant dans la cuve (10) dépasse une pression maximum donnée.

14. Dispositif selon l'une quelconque des revendications 3 à 5, caractérisé en ce que le flotteur (38') comprend une membrane déformable (54') formant son extrémité inférieure et occupant une position inférieure ou une position supérieure, selon que la pression régnant dans la cuve (10) est inférieure ou supérieure à une pression maximum donnée, ladite membrane (54') étant fixée en son centre sur une pièce (66) apte à coulisser verticalement par rapport à l'organe de supportage (20), cette pièce étant en appui contre une butée haute (20b) de l'organe de supportage (20) lorsque le flotteur (38) est en position haute.

## Claims

1. Apparatus for automatically initiating the drop of a neutron, absorbing element (18) into the core (12) of a nuclear reactor, when the level of a cooling liquid circulating in a vessel containing the reactor core drops below a given minimum level, the absorbing member (18) normally being suspended on a support member (20), characterized in that the apparatus comprises a gripper or tongs with at least two fingers (30), mounted on the support member (20) and by which the absorbing member is suspended on the support member, said tongs being able to occupy a closed position and an open position; and at least one float (38, 38') associated with the support member (20), so as to be able to move vertically between a raised position and a lowered position, said float controlling the locking of the tongs in the closed position when it is in the raised position and allowing the opening of the tongs when it is in the lowered position.

2. Apparatus according to claim 1, characterized in that each of the tong fingers (30) comprises a cam surface (34c) facing a cam surface (44a) formed on the float (38), a locking member (46, 46') being placed between each of the cam surfaces (34c) formed on the fingers and the cam surface (44a) formed on the float.

3. Apparatus according to claim 2, characterized in that the locking members are non-floating balls (46) inserted between a lower abutment (48) formed on the float (38) and an upper abutment (47, 47') associated with the support member (20).

4. Apparatus according to claim 3, characterized in that the tong fingers (30) are fixed to the support member (20) and have an elastic portion (32) radially deformable with respect to a vertical axis of the support member and which supports the gripping member (34), said upper abutment (47) being formed on each of the fingers.

5. Apparatus according to claim 3, characterized in that the tong fingers (30) are mounted on a part able to slide vertically between lower normal operation position and an upper rearming position with respect to the support member (20), each of the fingers (30) having an elastic portion (32) radially deformable with respect to a vertical axis of the support member and which supports the gripping member (34) and elastic means (72) being placed between the support member and said part (70) in order to bring the latter into the lower normal operation position.

6. Apparatus according to claim 2, characterized in that the locking members are floating balls (46') placed between a lower abutment (49) and an upper abutment (47) formed on each of the fingers (30).

7. Apparatus according to claim 1, characterized in that the float (38') constitutes a locking member placed between facing cam (34c) surfaces formed on the tong fingers (30).

8. Apparatus according to claim 7, characterized in that the float is extended at its upper end by a receptacle able to trap liquid introduced by an opening formed at its upper end.

9. Apparatus according to claim 7, characterized in that each float is a ball (38') placed between a lower abutment (49) formed on each of the fingers (30) and an upper abutment (80a) associated with the support member (20).

10. Apparatus according to any one of the claims 1 to 9, characterized in that a mechanical control member (56, 80) is mounted on the support member (20) so as to slide vertically with respect to the latter, said control member bearing on the float (38, 38'), in such a way that its downward displacement brings the float into the bottom position.

11. Apparatus according to claim 10, characterized in that the displacement of the control member (80) is control led by a drop control mechanism.

12. Apparatus according to claim 10, characterized in that the displacement of the control member (56) is controlled by a device (52) sensitive to the pressure prevailing in the vessel (10) to control the downward displacement of said control member (56) when the pressure exceeds a maximum given pressure.

13. Apparatus according to any one of the claims 1 to 11, characterized in that each float (38, 38') comprises at least one part (40a, 38'a) able to tear away when the pressure in the vessel (10) exceeds a maximum given pressure.

14. Apparatus according to any one of the claims 3 to 5, characterized in that the float (38) comprises a deformable diaphragm (54') forming its lower end and occupying a lower position or an upper position, as a function of whether the pressure in the vessel (10) is below or above a maximum given pressure, the diaphragm (54') being centrally fixed to a part (66) able to slide vertical ly with respect to the support member (20), said part bearing against a top abutment (20b) of the support member (20) when the float (38) is in the upper position.

**Patentansprüche**

1. Vorrichtung zum automatischen Auslösen des Herabfallens eines Absorberelements (18), das die Neutronen im Kern (12) eines Kernreaktors absorbiert, wenn der Stand einer Kühlflüssigkeit, die in einer Wanne (10), die den Reaktorkern enthält, zirkuliert, unter einen Minimalstand fällt, wobei das absorbierende Element (18) normalerweise an einem Träger (20) aufgehängt ist, wobei diese Vorrichtung gekennzeichnet ist

– durch eine Zange, die auf dem Träger (20) montiert ist und durch die das absorbierende Element (18) an dem Träger aufgehängt ist, wobei die Zange wenigstens zwei Finger (30) umfaßt, die jeweils ein radial, bezüglich einer vertikalen Achse des Trägers bewegliches Greifstück (34) umfassen, so daß die Zange eine Verschluß- und eine Öffnungsposition einzunehmen kann, wobei eine Nockenoberfläche (34c) auf jedem der Greifstücke (34) gebildet ist;

– durch ein Verriegelungselement (46, 46', 38'), das in Kontakt mit den Nockenoberflächen (34c) angeordnet ist, so daß es sich vertikal zwischen einer hohen Position, in der das Element die Zange in der Verschlußposition verriegelt, und einer unteren Position, In der das Element das Öffnen der Zange gestattet, bewegen kann;

– durch wenigstens einen mit dem Träger (90) derart verbundenen Schwimmkörper (38, 38'), daß er sich vertikal zwischen einer hohen und einer tiefen Position bewegen kann, um die vertikale Bewegung des Verriegelungselements zwischen seiner hohen und seiner tiefen Position zu steuern.

2. Vorrichtung nach Anspruch 1, dadurch gekennzeichnet, daß auf einem vertikalen Schaft des Schwimmkörpers eine Nockenoberfläche (34c) gebildet ist, wobei ein Verriegelungselement (46, 46') zwischen jeder der Nockenoberfläche (34c), die auf den Fingern gebildet sind, und der Nockenoberfläche (44a), die auf dem vertikalen Schaft gebildet ist, angeordnet ist.

3. Vorrichtung nach Anspruch 2, dadurch gekennzeichnet, daß die Verschlußelemente nicht schwimmende Kugeln (46) sind, die zwischen einem auf dem Schwimmkörper (38) gebildeten, unteren Anschlag (48) und einem mit dem Träger (20) verbundenen, oberen Anschlag (47, 47') angeordnet sind.

4. Vorrichtung nach Anspruch 3, dadurch gekennzeichnet, daß die Finger (30) der Zange an dem Träger (20) befestigt sind und einen elastischen Teil (32) umfassen, der radial bezüglich einer vertikalen Achse des Trägers deformierbar ist und der das Greiferelement (34) trägt, wobei der obere Anschlag (47) auf jedem der Finger gebildet ist.

5. Vorrichtung nach Anspruch 3, dadurch gekennzeichnet, daß die Finger (30) der Zange auf einem Teil (70) montiert sind, das geeignet ist vertikal bezüglich dem Träger (20) zwischen einer unteren, normalen Funktionsposition und einer oberen Wiederaufladeposition zu gleiten, wobei jeder der Finger (30) einen elastischen Teil (32) umfasst, der radial bezüglich einer vertikalen Achse des Trägers deformierbar ist und der das Greiferelement (34) trägt, und wobei eine elastische Vorrichtung (72) zwischen dem Träger (20) und dem Teil (70) angeordnet ist, um letzteres in die untere, normale Funktionsposition anzuordnen.

6. Vorrichtung nach Anspruch 2, dadurch gekennzeichnet, daß die Verschlußelemente schwimmende Kugeln (46') sind, die zwischen einer unteren Trennwand (49) und einem oberen, auf jedem der Finger (30) gebildeten Anschlag angeordnet sind.

7. Vorrichtung nach Anspruch 1, dadurch gekennzeichnet, daß der Schwimmkörper (38') ein Verschlußelement bildet, das zwischen den gegenüberliegenden, auf den Fingern (30) der Zange gebildeten Nockenoberflächen angeordnet ist.

8. Vorrichtung nach Anspruch 7, dadurch gekennzeichnet, daß der Schwimmkörper an seinem oberen Ende durch einen Vorratsbehälter verlängert ist, der geeignet ist, durch eine in seinem oberen Ende gebildete Öffnung eingeführte Flüssigkeit aufzunehmen.

9. Vorrichtung nach Anspruch 7, dadurch gekennzeichnet, daß jeder der Schwimmkörper eine Kugel (38') ist, die zwischen einem unteren, auf jedem der Finger (30) gebildeten Anschlag (49) und einem mit dem Träger (20) verbundenen, oberen Anschlag (80a) angeordnet ist.

10. Vorrichtung nach einem der Ansprüche 1 bis 9, dadurch gekennzeichnet, daß ein mechanisches Steuerelement (56, 80) so auf dem Träger (20) montiert ist, daß es vertikal zu diesem gleiten kann, wobei das Steuerelement sich so auf den Schwimmkörper (38, 38') stützt, daß seine Bewegung nach unten dazu führt, daß es den Schwimmkörper in die untere Position mitnimmt.

11. Vorrichtung nach Anspruch 10, dadurch gekennzeichnet, daß die Bewegung des Steuerelements (80) durch einen Fallsteuerungsmechanismus gesteuert wird.

12. Vorrichtung nach Anspruch 10, dadurch gekennzeichnet, daß die Bewegung des Steuerelements (56) durch eine Vorrichtung (52) gesteuert wird, die auf den in der Wanne (10) herrschenden Druck empfindlich ist, um die Bewegung des Steuerelements (56) nach unten zu steuern, wenn dieser Druck einen gegebenen, maximalen Druck übersteigt.

13. Vorrichtung nach einem der Ansprüche 1 bis 11, dadurch gekennzeichnet, daß jeder Schwimmkörper (38, 38') wenigstens einen Teil (40a, 38'a) umfaßt, der geeignet ist, zu zerreißen, wenn der in der Wanne (10) herrschende Druck einen gegebenen, maximalen Druck übersteigt.

14. Vorrichtung nach einem der Ansprüche 3 bis 5, dadurch gekennzeichnet, daß der Schwimmkörper (38) eine deformierbare Membran (54') umfaßt, die sein unteres Ende bildet und eine untere oder obere Stellung einnimmt, je nachdem, ob der in der Wanne (10) herrschende Druck unter oder über einem gegebenen, maximalen Druck liegt, wobei die Membran (54') in ihrer Mitte an einem Teil (66) befestigt ist, das geeignet ist, vertikal bezüglich dem Träger (20) zu gleiten, wobei dieses Teil sich auf einen oberen Anschlag (20b) des Trägers (20) stützt, wenn der Schwimmkörper (38) sich in der hohen Position befindet.

FIG. 1

FIG. 2

FIG. 3

FIG. 11

FIG. 4

FIG. 5

FIG. 9

FIG. 6

FIG. 7

FIG. 8

FIG. 10